Europäisches Patentamt

European Patent Office

Office européen des brevets

(11) Numéro de publication: **0 421 900 A1**

## (12) DEMANDE DE BREVET EUROPEEN

(21) Numéro de dépôt: 90420430.2

(22) Date de dépôt: 03.10.90

(51) Int. Cl.5: **F16J 15/24**, F16J 15/56

(30) Priorité: 04.10.89 FR 8912953

(43) Date de publication de la demande:
10.04.91 Bulletin 91/15

(84) Etats contractants désignés:
BE CH DE FR GB IT LI NL

(71) Demandeur: **Foa, Michel**
**La Ferventerie, Montigny/Avre**
**F-28270 Brezolles(FR)**

(72) Inventeur: **Foa, Michel**
**La Ferventerie, Montigny/Avre**
**F-28270 Brezolles(FR)**

(74) Mandataire: **Maureau, Philippe et al**
**Cabinet GERMAIN & MAUREAU BP 3011**
**F-69392 Lyon Cédex 03(FR)**

(54) Dispositif d'étanchéité pour organe cylindrique mobile axialement et/ou en rotation dans une chambre.

(57) Ce dispositif est du type comportant un élément annulaire statique (6) pourvu d'une surface en bout tronconique femelle (8) et dont la paroi cylindrique extérieure épouse celle (7) de la chambre (4) entourant l'organe mobile (2), un élément annulaire dynamique (10) pourvu d'une surface en bout tronconique mâle (11) de même angle au sommet que la surface tronconique femelle (8) de l'élément statique (6) et d'un alésage central (12) coulissant sur la surface cylindrique de l'organe mobile (2) et des moyens élastiques (16) agissant coaxialement au piston (2) sur l'un des éléments annulaires (6,10) de manière à appliquer, l'une contre l'autre, leurs surfaces tronconiques mâle (11) et femelle (8).

D'une part, l'élément annulaire statique (6) est emmanché de force dans la chambre (4) dans laquelle il assure l'étanchéité au niveau de la paroi cylindrique (7) de cette chambre (4) et, d'autre part, les moyens élastiques (16) qui engendrent une force coaxiale à l'organe cylindrique mobile (2) sont montés de manière à agir seulement sur l'élément annulaire dynamique (10).

# DISPOSITIF D'ETANCHEITE POUR ORGANE CYLINDRIQUE MOBILE AXIALEMENT ET/OU EN ROTATION DANS UNE CHAMBRE

La présente invention concerne un dispositif d'étanchéité pour organe cylindrique mobile axialement et/ou en rotation dans une chambre et dont l'efficacité est conservée, même avec des liquides à faible pouvoir lubrifiant. Ce dispositif vise plus particulièrement, quoique non exclusivement, l'étanchéité entre le piston et le cylindre d'une pompe hydraulique.

On connaît le problème de l'étanchéité entre un piston de pompe hydraulique et son cylindre. Ce problème est complexe du fait que l'on doit obtenir deux résultats contradictoires :
- une étanchéité permettant d'obtenir le débit désiré sans fuite, donc avec un rendement optimum,
- une fuite contrôlée entre le piston et son système d'étanchéité afin d'assurer la lubrification et le refroidissement de l'ensemble.

Afin d'obtenir ces résultats, on est conduit dans des solutions connues a utiliser des matériaux ayant un très faible coefficient de frottement, tels que des bronzes alliés, les diverses pièces devant être réalisées avec des précisions dimensionnelles de l'ordre de quelques microns.

Malgré ces dispositions technologiques très coûteuses, ces systèmes présentent de graves inconvénients : d'une part la filtration du liquide pompé doit être très poussée et, d'autre part, la température du fluide doit être relativement faible. Si, dans certains circuits fermés destinés à une utilisation hydrostatique, il est relativement facile de filtrer à l'aspiration et de refroidir le liquide circulant, ce n'est pas le cas des circuits ouverts, tels que ceux permettant le pompage de l'eau dans le sous-sol, ou le ballastage des navires. Si les eaux sont chargées de particules ou à des températures excédant 28 à 30° C, la détérioration des pompes intervient rapidement, malgré l'utilisation d'aciers inoxydables, de bronzes fortement alliés ou d'autres matériaux métalliques sophistiqués. Le problème s'aggrave encore si l'eau est saline, par l'apparition de couples électrolytiques favorisés par la température. Le système selon l'invention a pour but de remédier à ces divers inconvénients et de fournir une solution économique et fiable au problème des pompes à eaux, ou à fluides peu lubrifiants, pouvant transporter des particules et atteindre aisément des températures de l'ordre de 60° C ou plus.

Par le document K. TRUTNOVSKY : "Berührungsdichtungen", édition 2, 1975, Springer-Verlag, Berlin, DE, page 196, on connaît un dispositif d'étanchéité entre un arbre tournant et une chambre dans laquelle il est partiellement logé, comprenant en combinaison :

-un élément annulaire statique pourvu d'une surface en bout tronconique femelle et dont la paroi cylindrique extérieure épouse celle de la chambre entourant l'arbre,
- un élément annulaire dynamique pourvu d'une surface en bout tronconique mâle de même angle au sommet que la surface tronconique femelle de l'élément statique et d'un alésage central coulissant sur la surface cylindrique de l'arbre et
- des moyens élastiques agissant coaxialement au piston sur l'élément statique de manière à appliquer, l'une contre l'autre, leurs surfaces tronconiques mâle et femelle.

Il est cependant très difficile d'obtenir une bonne étanchéité avec ce dispositif car si l'élément statique est monté coulissant librement dans la chambre, il est pratiquement impossible d'obtenir une bonne étanchéité entre chaque élément annulaire et la surface cylindrique contre laquelle il est appliqué tandis que l'élément statique est emmanché à force dans la chambre, sa liaison avec la paroi de cette dernière annihile les effets des moyens élastiques.

La présente invention vise à remédier à tous ces inconvénients. A cet effet, elle concerne un dispositif d'étanchéité pour organe cylindrique mobile axialement et/ou en rotation dans une chambre, du dernier type cité et dans ce dispositif, d'une part, l'élément annulaire statique est emmanché de force dans la chambre dans laquelle il assure l'étanchéité au niveau de la paroi cylindrique de cette chambre et, d'autre part, les moyens élastiques qui engendrent une force coaxiale à l'organe cylindrique mobile sont montés de manière à agir sur l'élément annulaire dynamique.

De cette manière, ces moyens élastiques conservent toute leur efficacité et seulement la composante radiale dirigée vers l'intérieur, de la force élastique qu'ils engendrent, composante qui résulte de la réaction l'une contre l'autre des faces tronconiques des deux éléments, est mise à profit pour obtenir l'étanchéité entre l'élément annulaire dynamique et l'organe cylindrique mobile. En effet, l'étanchéité entre l'élément annulaire statique et la paroi cylindrique de la chambre est obtenue au montage, par l'emmanchement à force de cet élément dans la chambre.

Suivant une forme d'exécution efficace de ce dispositif, l'angle au sommet des surfaces en bout tronconiques des deux éléments annulaires est de 45°.

En outre, de préférence, le diamètre de l'alésage de l'élément annulaire statique est supérieur à celui de l'organe cylindrique mobile et le diamètre extérieur de l'élément annulaire dynamique est inférieur à celui de la chambre.

Suivant une forme d'exécution avantageuse de l'invention visant à améliorer l'efficacité de ce dispositif, les deux éléments annulaires sont réalisés en un matériau présentant une légère élasticité, un faible coefficient de frottement et une grande inertie aux variations de température. Un matériau convenant parfaitement à la réalisation de ces joints sont les polymères fluorés comme le polytétrafluoréthylène dont le coefficient de frottement est très faible, même en présence d'un fluide peu lubrifiant. En outre, ce matériau peut être usiné avec une précision suffisante à cette application.

Par ailleurs, lorsqu'il est appliqué à un organe mobile axialement, tel qu'un piston de pompe, ce dispositif comprend avantageusement, entre la partie avant de la chambre qui entoure le piston, ou chambre de refoulement et la partie arrière de cette chambre qui loge les moyens élastiques qui agissent sur l'élément annulaire dynamique, un joint racleur disposé autour du piston, entre les deux éléments annulaires et un épaulement séparant les deux parties de chambre et lui servant d'appui.

Ce joint racleur a pour but d'empêcher les particules éventuellement en suspension dans le fluide pompé de parvenir aux éléments annulaires.

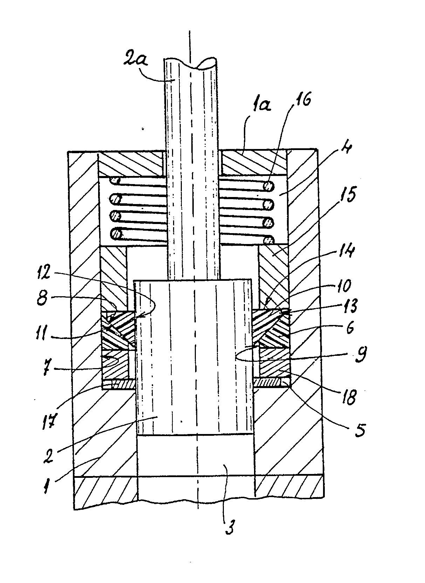

De toute façon, l'invention sera bien comprise à l'aide de la description qui suit en référence au dessin schématique annexé dont l'unique figure représentant à titre d'exemple non limitatif une forme d'exécution de ce dispositif d'étanchéité dans le cas de son application au piston d'une pompe hydraulique.

Sur cette figure, le cylindre 1 de la pompe équipée de ce dispositif est montré en coupe axiale. A l'intérieur de ce cylindre 1 est monté axialement mobile un piston cylindrique 2 solidaire d'une tige 2a et qui divise la cavité intérieure du cylindre 1 en une chambre de refoulement 3 et une chambre arrière 4.

Le dispositif d'étanchéité selon l'invention est destiné à assurer l'étanchéité entre la face cylindrique interne 12 de la chambre arrière 4 du cylindre 1 et la surface cylindrique externe du piston 2.

Ce dispositif d'étanchéité comprend un élément annulaire statique 6, un élément annulaire dynamique 10 et des moyens à ressort 15,16 agissant sur eux coaxialement au piston 2.

L'élément statique 6 présente une face cylindrique externe permettant son emmanchement à force dans l'alésage 7 de la chambre arrière 4 du cylindre 1. Le diamètre de la face cylindrique interne 9 de cet élément statique 6 est légèrement supérieur à celui de la face cylindrique du piston 2. Enfin, cet élément statique 6 présente à son extrémité tournée dans la direction opposée à celle de la chambre de refoulement 3 une face en bout tronconique femelle 8.

L'élément dynamique 10 présente une surface cylindrique interne 12 d'un diamètre lui permettant de glisser à coulissement doux sur la face cylindrique du piston 2. La face cylindrique externe 13 de cet élément dynamique 10 présente un diamètre légèrement inférieure à celui de l'alésage 7 de la chambre arrière 4. Cet élément dynamique 10 présente, à son extrémité tournée vers la chambre de refoulement 3 une face en bout tronconique mâle 11 de même angle au sommet que la face en bout tronconique femelle 8 de l'élément statique 6 contre laquelle elle est destinée à prendre appui comme illustré sur le dessin.

Les moyens à ressort logés dans la chambre arrière 4 comprennent un ressort hélicoïdal 16 comprimé entre la plaque de fermeture arrière la du cylindre 1 et une bague entretoise 15 montée coulissante dans l'alésage 7 de la chambre arrière 4 et dont la face annulaire opposée au ressort 16 est maintenue, par ce dernier, en appui contre la face annulaire plane 14 tournée vers elle de l'élément annulaire dynamique 10.

On conçoit aisément que la pression exercée par le ressort 16 et la bague entretoise 15 sur l'élément dynamique 10 tend à pousser sa face tronconique mâle 11 contre la face tronconique femelle 8 de l'élément statique. Ce dernier étant immobilisée axialement dans l'alésage 7 de la chambre arrière 4, il en résulte une composante radiale dirigée sur le centre c'est-à-dire vers le piston 2 qui tend à appliquer la face cylindrique interne 12 de l'élément dynamique contre la face cylindrique du piston 2 en assurant entre ces deux éléments une excellente étanchéité. Il faut noter par ailleurs que l'emmanchement à force de l'élément statique dans l'alésage 7 de la chambre arrière 4 assure l'étanchéité au niveau de cet alésage. Enfin, la force d'application, l'une contre l'autre, des deux faces tronconiques mâle 11 et femelle 8 des éléments annulaires dynamique 10 et statique 6 assure une parfaite étanchéité entre ces deux éléments.

En conséquence, le dispositif d'étanchéité constitué par les trois éléments qui le composent assure donc une parfaite étanchéité entre le piston 2 et la chambre arrière 4, de sorte que le fluide sous pression contenu dans la chambre 3 et sur laquelle agit le piston 2 est empêché d'atteindre la chambre arrière 4.

Naturellement, il est préférable que les éléments annulaires 6 et 10 soient en un matériau présentant à la fois une légère élasticité permettant sa déformation radiale, un faible coefficient de frottement vis-à-vis de la matière constitutive du piston 2 et une grande inertie aux variations de température. Un matériau convenant parfaitement à la constitution de ces éléments annulaires 6 et 10 est un polymère fluoré comme le polytétrafluoréthylène.

Par ailleurs, lorsque l'organe mobile est un organe axialement mobile comme cela est le cas lorsqu'il constitue le piston d'une pompe comme dans l'exemple précédemment décrit, le dispositif d'étanchéité de l'invention comprend, en outre, avantageusement, un joint racleur 17 disposé autour du piston 2 entre l'épaulement 5 de la chambre arrière 4 et l'élément annulaire statique 6. Ce joint a pour but d'empêcher les particules éventuellement en suspension dans le fluide pompé de parvenir jusqu'aux éléments annulaires 6 et 10.

Pour éviter aussi que les particules éventuellement accumulées dans l'alésage du joint racleur 17 ne puissent être transportées par le piston 2 jusque dans l'alésage 16 de l'élément annulaire dynamique 10, il est prévu entre l'élément annulaire statique 6 et le joint racleur 7 une entretoise annulaire 18 dont l'épaisseur est au moins égale à la course du piston 2. Dans ce cas, comme le montre l'unique figure du dessin, l'épaulement de la chambre de travail 4 contre lequel est appliqué l'élément statique 6 est constitué par la face tournée vers lui de la bague entretoise 18.

## Revendications

1. Dispositif d'étanchéité pour organe cylindrique mobile, axialement et/ou en rotation, dans une chambre, du type comportant :
- un élément annulaire statique (6) pourvu d'une surface en bout tronconique femelle (8) et dont la paroi cylindrique extérieure épouse celle (7) de la chambre (4) entourant l'organe mobile (2),
- un élément annulaire dynamique (10) pourvu d'une sur face en bout tronconique mâle (11) de même angle au sommet que la surface tronconique femelle (8) de l'élément statique (6) et d'un alésage central (12) coulissant sur la surface cylindrique de l'organe mobile (2) et
- des moyens élastiques (16) agissant coaxialement au piston (2) sur l'un des éléments annulaires (6,10) de manière à appliquer, l'une contre l'autre, leurs surfaces tronconiques mâle (11) et femelle (8), caractérisé en ce que, d'une part, l'élément annulaire statique (6) est emmanché de force dans la chambre (4) dans laquelle il assure l'étanchéité au niveau de la paroi cylindrique (7) de cette chambre (4) et, d'autre part, les moyens élastiques (16) qui engendrent une force coaxiale à l'organe cylindrique mobile (2) sont montés de manière à agir seulement sur l'élément annulaire dynamique (10).

2. Dispositif selon la revendication 1, caractérisé en ce que l'angle au sommet des surfaces en bout tronconiques femelle (8) et mâle (11) des deux éléments annulaires (6 et 10) est de 45°

3. Dispositif selon la revendication 1 ou la revendication 2, caractérisé en ce que le diamètre de l'alésage (9) de l'élément annulaire statique (6) est supérieur à celui de l'organe cylindrique mobile (2) et le diamètre extérieur (13) de l'élément annulaire dynamique (10) est inférieur à celui de la chambre (4).

4. Dispositif selon l'une des revendications précédentes, caractérisé en ce que les deux éléments annulaires (6,10) sont réalisés en un matériau présentant une légère élasticité, un faible coefficient de frottement et une grande inertie aux variations de température, tel qu'un polymère fluoré comme le polytétrafluoréthylène.

5. Dispositif selon l'une quelconque des revendications précédentes, caractérise en ce que lorsqu'il est appliqué à un organe mobile axialement, tel qu'un piston de pompe (2), il comprend avantageusement, entre la partie avant (3) de la chambre qui entoure le piston (2), ou chambre de refoulement, et la partie arrière (4) de cette chambre, qui loge les moyens élastiques (16) qui agissent sur l'élément annulaire dynamique (10), un joint racleur (17) disposé autour du piston (2), entre les deux éléments annulaires (6,10) et un épaulement (5) séparant les deux parties de chambre (3,4) et lui servant d'appui.

6. Dispositif selon la revendication 5, caractérisé en ce qu'entre le joint racleur (17) et l'élément annulaire statique (6) est prévue une entretoise annulaire (18) dont l'épaisseur est au moins égale à la course axiale du piston (2).

Office européen
des brevets

**RAPPORT DE RECHERCHE
EUROPEENNE**

Numéro de la demande

**EP 90 42 0430**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-2 847 236  (LAZAR)<br>* Colonne 2, ligne 25 - colonne 4, ligne 60; figure 1 *<br>– – – | 1-4 | F 16 J<br>15/24<br>F 16 J 15/56 |
| D,X | K. TRUTNOVSKY: "Berührungsdichtungen", vol. 2, 1975, page 196, Springer-Verlag, Berlin, DE<br>* Page 196, paragraphe 3; figure 21.9 (partie droite) *<br>– – – | 1-4 | |
| A | FR-A-2 252 513  (SIEMENS)<br>* Page 2, lignes 5-15 *<br>– – – | 5 | |
| A | GB-A-2 007 777  (DAIMLER-BENZ)<br>* Document entier *<br>– – – – – | 2,3 | |
| | | | **DOMAINES TECHNIQUES RECHERCHES (Int. Cl.5)**<br><br>F 16 J |

Le présent rapport de recherche a été établi pour toutes les revendications

| Lieu de la recherche | Date d'achèvement de la recherche | Examinateur |
|---|---|---|
| La Haye | 22 janvier 91 | LEGER M.G.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
-------------------------------------------------
& : membre de la même famille, document correspondant